# FASCICULE DE BREVET EUROPEEN

(11) **EP 3 066 320 B1**
(45) Date de publication et mention de la délivrance du brevet: **29.12.2021**
(21) Numéro de dépôt: 14806029.6
(22) Date de dépôt: 06.11.2014
(51) Int. Cl.: F02C 7/20, B64D 27/26, B64D 27/20, F02C 7/32

(54) **TURBOMACHINE ÉQUIPÉE DE MOYENS DE REPRISE DES EFFORTS DE POUSSÉE DE SON MOTEUR**
TURBINENMOTOR MIT EINEM MITTEL ZUR ABSORPTION VON BELASTUNGEN AUFGRUND DES SCHUBS DIESES MOTORS
TURBINE ENGINE PROVIDED WITH MEANS FOR ABSORBING STRESSES FROM THE THRUST OF THE ENGINE THEREOF

(30) Priorité: 07.11.2013 FR 1360904
(43) Date de publication de la demande: 14.09.2016
(73) Titulaire: Safran Aircraft Engines, 75015 Paris (FR)
(72) Inventeur: FERT, Jérémy, Edmond, F-77550 Moissy-Cramayel Cedex (FR); ANCUTA, Carmen, F-77550 Moissy-Cramayel Cedex (FR)
(74) Mandataire: Gevers & Orès
(86) Numéro de dépôt international: PCT/FR2014/052847
(87) Numéro de publication internationale: WO 2015/067906

(56) Documents cités:
- EP-A2- 1 627 812
- EP-A2- 2 607 658
- US-A1- 2009 175 716
- US-B1- 6 401 448
- None

## Description

### DOMAINE TECHNIQUE

La présente invention concerne une turbomachine comportant deux carters annulaires structuraux reliés entre eux par des moyens de reprise des efforts de poussée du moteur.

### ETAT DE L'ART

Une turbomachine d'aéronef comprend d'amont en aval, dans le sens d'écoulement des gaz dans le moteur, une entrée d'air, au moins un compresseur, une chambre de combustion, au moins une turbine, et une tuyère d'éjection des gaz de combustion.

Un turboréacteur à double flux comprend notamment un corps basse pression comportant un premier arbre reliant un compresseur basse pression à une turbine basse pression, et un corps haute pression comportant un second arbre reliant un compresseur haute pression à une turbine haute pression. L'air pénétrant dans le moteur est comprimé successivement dans le compresseur basse pression et le compresseur haute pression avant d'être mélangé à du carburant qui est brûlé dans la chambre de combustion. Les gaz de combustion se détendent ensuite dans la turbine haute pression puis la turbine basse pression pour entraîner en rotation l'arbre basse pression qui entraîne à son tour un arbre de soufflante, la soufflante étant montée en amont des compresseurs et générant la majeure partie de la poussée du turboréacteur.

Les différents modules de la turbomachine sont entourés par des carters annulaires structuraux, c'est-à-dire des carters suffisamment rigides pour transmettre des efforts. Ainsi, une turbomachine peut notamment comprendre d'amont en aval un carter de soufflante, un carter de compresseur basse pression, un carter intermédiaire qui s'étend entre les compresseurs basse et haute pression, des carters de compresseur haute pression, de chambre de combustion et de turbine haute pression, un carter inter-turbine qui s'étend entre les turbines haute pression et basse pression, un carter de turbine basse pression et un carter d'échappement au niveau de la tuyère de la turbomachine.

Dans la technique actuelle, il est connu d'augmenter le taux de dilution d'un turboréacteur à double flux, c'est-à-dire le rapport du débit du flux secondaire généré par la soufflante sur le débit du flux primaire alimentant le moteur. Ceci renforce l'effet de taille de guêpe de la turbomachine dont le moteur a un corps (en particulier au niveau du compresseur haute pression) qui a un diamètre relativement faible par rapport au carter de soufflante.

Plus une turbomachine a une taille de guêpe marquée, plus son corps risque de fléchir en fonctionnement. Pour remédier à ce problème, il est connu d'équiper une turbomachine de moyens de reprise des efforts de poussée du moteur, qui comprennent en général des bielles longitudinales dont une extrémité est articulée sur le carter intermédiaire et dont l'extrémité opposée est articulée sur des moyens de suspension de la turbomachine à un pylône d'aéronef.

Il est aussi connu d'équiper une turbomachine de moyens de reprise des efforts de poussée du moteur qui comprennent en général des bielles longitudinales dont une extrémité est articulée sur le carter intermédiaire et dont l'extrémité opposée est articulée sur un carter de soufflante. Une telle configuration est connue des documents EP 2 607 658 et EP-1.627.812-A2. Le rôle des
bielles de reprise de poussée est de limiter les charges de poussée traversant les carters du moteur, ce qui permet d'éviter la flexion sous charges des carters sensibles, tels que ceux des compresseurs et turbines, où une bonne concentricité est indispensable en particulier pour minimiser les jeux en sommet d'aubes de rotor et assurer des performances satisfaisantes.

Par ailleurs, une turbomachine comprend un boîtier d'accessoires (ou boîte d'engrenages ou AGB, acronyme d'*Accessory Gear Box*) qui permet l'entraînement d'équipements tels qu'un groupe de lubrification par exemple. On a déjà proposé de monter un boîtier d'accessoires au voisinage du corps du moteur plutôt que dans la nacelle de la turbomachine. Cependant, un boîtier d'accessoires est relativement encombrant et son intégration est relativement complexe autour des carters du moteur, en particulier car il y a déjà de nombreux accessoires déjà installés dans cette zone. Les bielles précitées de reprise de poussée traversent cette zone et rendent difficile cette intégration car le boîtier d'accessoires devrait être séparé des bielles par des jeux suffisants pour éviter tout contact entre eux.

La présente invention apporte notamment une solution simple, efficace et économique à au moins une partie des problèmes de la technique antérieure.

### EXPOSE DE L'INVENTION

L'invention propose une turbomachine, comportant deux carters annulaires structuraux reliés entre eux par des moyens de reprise des efforts de poussée du moteur, qui comprennent des bielles, caractérisée en ce que ces moyens de reprise de poussée comprennent en outre au moins un boîtier d'accessoires qui est fixé à un premier desdits carters et qui est relié par lesdites bielles à l'autre desdits carters.

Selon l'invention, le ou les boîtiers d'accessoires font partie des moyens de reprise de poussée et participent donc à la reprise des efforts transitant dans le corps du moteur en fonctionnement. Le ou les boîtiers d'accessoires assurent ainsi au moins un chemin d'effort entre les carters structuraux. Le ou les boîtiers peuvent être rigidifiés par rapport à ceux de la technique antérieure pour assurer cette fonction. Par ailleurs, les bielles associées au(x) boîtier(s) peuvent être plus courtes et de section moins importantes que celles de la technique antérieure. En effet, l'utilisation du boîtier d'accessoires comme moyen de reprise de poussée permet de profiter des dimensions de ce boîtier pour raccourcir la longueur des bielles ainsi que leur diamètre. A charges identiques, plus la longueur des bielles augmente, plus le diamètre de celles-ci augmente également et réciproquement.

Selon un mode de réalisation de l'invention, ledit au moins un boîtier d'accessoires est fixé à un moyeu d'un carter intermédiaire.

Avantageusement, les bielles peuvent avoir une première extrémité articulée sur ledit au moins un boîtier d'accessoires et une deuxième extrémité reliée directement ou indirectement à un carter inter-turbine ou à un carter d'échappement. Chaque articulation peut être à pivot ou à rotule. Les bielles peuvent avoir la deuxième extrémité articulée sur le carter inter-turbine ou le carter d'échappement.

En variante, les bielles peuvent avoir la deuxième extrémité reliée au carter inter-turbine ou au carter d'échappement par l'intermédiaire de moyens de suspension aval de la turbomachine. Les bielles peuvent avoir la deuxième extrémité articulée sur les moyens de suspension qui sont montés sur ledit carter inter-turbine ou d'échappement.

De préférence, les moyens de suspension comprennent un élément support configuré pour être fixé à un pylône d'aéronef

Les moyens de reprise de poussée peuvent comprendre un seul boîtier d'accessoires qui a une forme générale en V ou U et qui comprend deux bras latéraux reliés ensemble par une partie médiane, cette partie médiane étant fixée audit premier carter et les bras étant chacun reliés par une bielle à l'autre carter. La demande de brevet FR 12/58196 décrit un boîtier d'accessoires de ce type. Les bras renferment des lignes d'engrenages qui sont situées dans des plans non parallèles et qui sont unies entre elles par au moins un engrenage situé dans la partie médiane de jonction des bras. La construction de la chaîne cinématique en plusieurs lignes d'engrenages situées dans des plans non parallèles permet de disposer d'un boîtier d'accessoires même de grandes dimensions entièrement à proximité du corps du moteur, sans encombrement excessif ni dans la direction radiale ni dans la direction axiale ni dans la direction angulaire, le boîtier n'étant pas rectiligne. On dispose de plus d'un grand choix de faces du boîtier d'accessoires, s'étendant dans des directions très différentes, pour y placer les équipements, ce qui contribue aussi à limiter l'encombrement de l'assemblage.

En variante, les moyens de reprise de poussée comprennent deux boîtiers d'accessoires indépendants et de forme allongée, chaque boîtier d'accessoires comportant une extrémité longitudinale fixée au premier carter et une extrémité longitudinale opposée reliée par une bielle à l'autre carter.

Les bielles peuvent être sensiblement parallèles entre elles et à l'axe longitudinal de la turbomachine. Les bielles sont ainsi disposées de facon beaucoup plus axiale que dans la technique antérieure et par conséquent peuvent ne reprendre que des efforts dans une seule direction, ce qui limite fortement les contraintes de flexion des bielles et permet de diminuer leur diamètre. En outre, dans un concept de suspension de la turbomachine dans lequel c'est la suspension avant qui transmettrait les efforts de poussée à l'avion via le pylone, les bielles fixées au boîtier d'accessoires n'aurait pour rôle que d'éviter la flexion des carters sensibles.

Chaque bielle peut comprendre une première extrémité articulée sur une chape solidaire d'un carter dudit au moins un boîtier d'accessoires et une seconde extrémité articulée sur une chape solidaire d'un organe monté sur ledit autre carter. L'organe peut être un anneau qui est monté autour dudit autre carter et sur lequel sont montés des moyens de suspension de la turbomachine à un pylône d'aéronef. En variante, l'organe peut être un élément support de moyens de suspension de la turbomachine à un pylône d'aéronef.

La présente invention concerne également des moyens de reprise de poussée pour une turbomachine telle que décrite ci-dessus, caractérisés en ce qu'ils comprennent au moins un boîtier d'accessoires comportant des moyens de fixation à un carter et des moyens d'articulation à au moins une bielle.

Ledit au moins un boîtier d'accessoires peut avoir une forme générale en U ou V dont chaque bras latéral porte des moyens d'articulation à une bielle. En variante, ledit au moins un boîtier d'accessoires a une forme allongée dont une extrémité longitudinale porte des moyens d'articulation à une bielle.

La présente invention concerne enfin une turbomachine comprenant le boîtier d'accessoires comportant un carter portant des moyens de fixation à la turbomachine et des moyens de liaison à des bielles, caractérisé en ce que son carter est structural pour assurer une transmission d'effort entre les moyens de fixation et les moyens de liaison.

Les boîtiers d'accessoires de la technique antérieure ne sont conçus pour assurer cette transmission d'effort et leurs carters ne sont donc pas structuraux. Le carter structural du boîtier d'accessoires peut comprendre une surépaisseur par rapport à ceux de la technique antérieure, des nervures de renfort, une section transversale de matière équivalente à celle des bielles, etc. L'homme du métier est compétent pour concevoir un carter structural de boîtier d'accessoires en fonction des efforts et des types d'effort qu'il est susceptible de transmettre.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés dans lesquels :
- la figure 1 est une vue schématique d'une turbomachine d'aéronef selon la technique antérieure, vue de côté,
- la figure 2 est une vue schématique partielle et en perspective d'une turbomachine selon l'invention,
- la figure 3 est une vue à plus grande échelle d'une partie de la figure 2,
- la figure 4 est une vue schématique partielle et en perspective d'une variante de réalisation de la turbomachine selon l'invention, et
- la figure 5 est une vue schématique partielle et en perspective d'une autre turbomachine selon l'invention.

### DESCRIPTION DETAILLEE

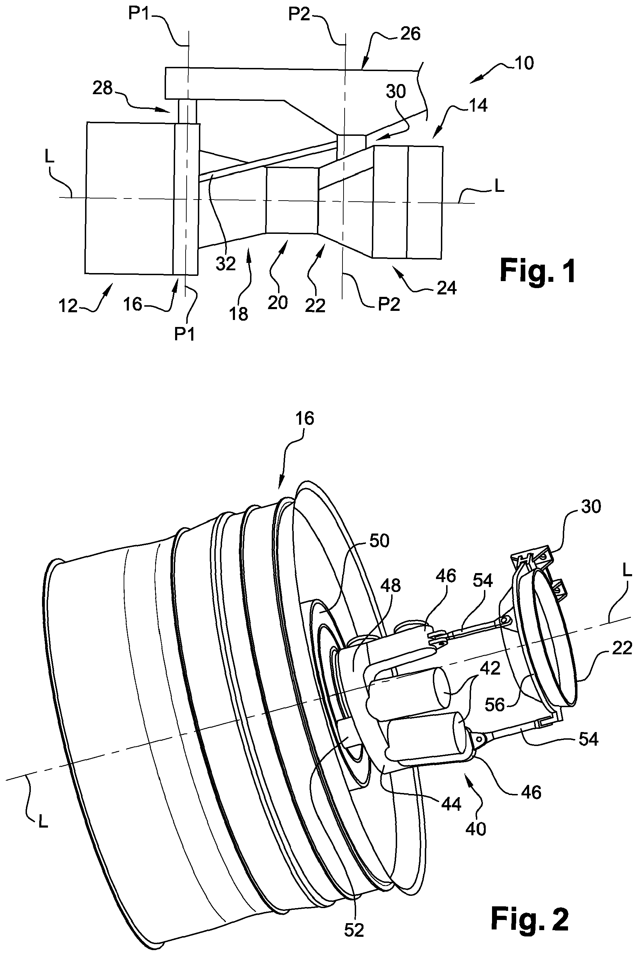

On se réfère d'abord à la figure 1 qui représente une turbomachine 10 selon la technique antérieure, cette turbomachine 10 étant ici un turboréacteur à double flux.

La turbomachine 10 comprend d'amont en aval, dans le sens d'écoulement des gaz, une soufflante 12 qui génère un flux qui se divise en deux flux coaxiaux, le flux primaire alimentant le moteur qui comprend un compresseur basse pression, un compresseur haute pression, une chambre de combustion, une turbine haute pression, une turbine basse pression et une tuyère 14 d'éjection des gaz de combustion.

Ces modules du moteur (soufflante, compresseurs, chambre de combustion, turbines) sont entourés par des carters annulaires structuraux. La turbomachine 10 comprend ainsi plusieurs carters annulaires successifs parmi lesquels un carter intermédiaire 16, un carter de compresseur haute pression 18, un carter de chambre de combustion 20, un carter inter-turbine 22 et un carter d'échappement 24.

Comme le montre la figure 1, pour assurer le montage et la fixation de la turbomachine 10 à un pylône 26 d'aéronef sous sa voilure, deux suspensions 28, 30 ou moyens de suspension, respectivement amont et aval, sont prévues, de manière à former une interface entre la turbomachine 10 et le pylône 26. La suspension amont 28 est disposée entre le pylône 26 et le carter intermédiaire 16 et la suspension aval est disposée entre le pylône 26 et le carter inter-turbine 22.

Les suspensions 28, 30 sont disposées et contenues dans deux plans de suspension P1 et P2 de la turbomachine, qui sont parallèles entre eux et orthogonaux à l'axe longitudinal L-L de celle-ci.

La turbomachine 10 de la figure 1 comprend en outre des moyens de reprise des efforts de poussée du moteur, qui comprennent ici deux bielles longitudinales 32 dont les extrémités amont sont articulées sur le carter intermédiaire 16 et dont les extrémités aval sont articulées sur la suspension aval 30.

Cependant, cette technologie présente des inconvénients parmi lesquels une intégration complexe d'au moins un boîtier d'accessoires du type AGB (pour l'entraînement d'équipements) dans la zone s'étendant autour du moteur qui est traversée par les bielles 32 de reprise de poussée.

L'invention permet de remédier à ces inconvénients en conférant au(x) boîtier(s) d'accessoires une fonction supplémentaire de reprise des efforts de poussée, le boîtier d'accessoires faisant ainsi partie intégrante des moyens de reprise de poussée de la turbomachine.

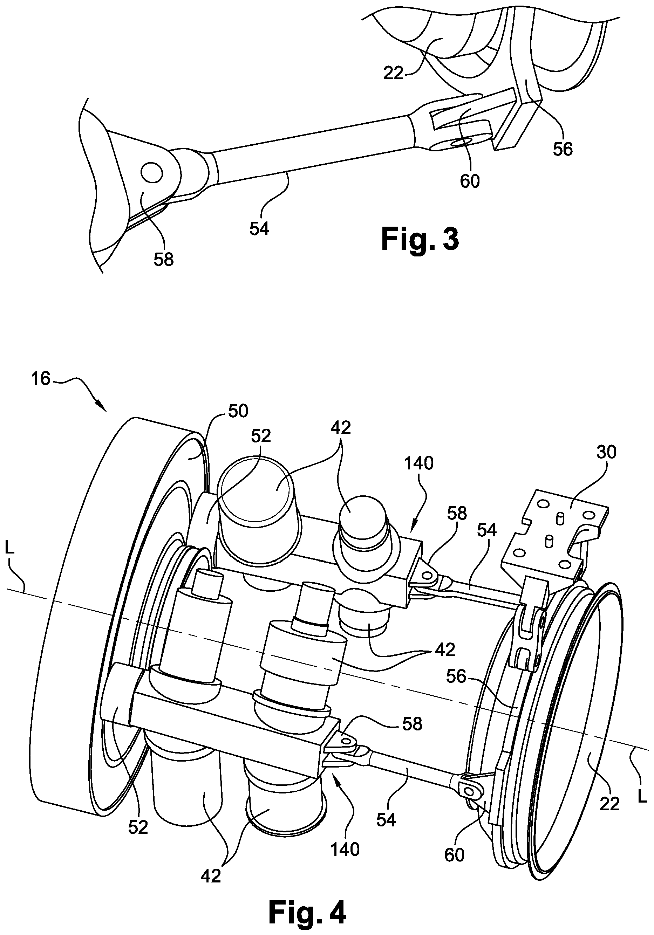

Les figures 2 à 4 représentent deux modes de réalisation de l'invention, les moyens de reprise de poussée du premier mode de réalisation (figures 2 et 3) comportant un seul boîtier d'accessoires 40 de forme générale en V ou U, et le second mode de réalisation (figure 4) comportant deux boîtiers d'accessoires 140 indépendants ayant chacun une forme allongée.

Un boîtier d'accessoires 40 en V ou U est décrit dans la demande FR 12/58196. Le boîtier d'accessoires 40 est destiné à transmettre une puissance mécanique originaire de la turbomachine par l'intermédiaire d'un arbre radial sortant de celle-ci, et à le transmettre aux équipements 42 qu'il porte, ces équipements 42 étant par exemple des pompes, des générateurs d'électricité, etc. La transmission s'effectue par une chaîne cinématique composée d'engrenages à l'intérieur d'un carter 44. Cette chaîne est reliée à l'arbre radial et à des arbres de prise d'entraînement des équipements 42 qui sont fixés au carter 44 du boîtier d'accessoires 40.

Le boîtier d'accessoires 40 comprend deux bras 46 reliés entre eux à une de leurs extrémités par une partie médiane 48. La partie médiane 48 est orientée vers l'amont de sorte que les bras 46 s'étendent vers l'aval et soient situés de manière symétrique de part et d'autre d'un plan passant par l'axe longitudinal LL de la turbomachine.

Dans l'exemple représenté, la partie médiane comprend une face aval de montage d'équipements 42 et les bras 46 comportent chacun une face latérale de montage d'équipements 42.

Le boîtier d'accessoires 40 est monté en aval du carter intermédiaire 16 et est fixé à celui-ci de façon à s'étendre autour d'une partie du carter de compresseur haute pression non représenté en figure 2 (mais référencé 18 dans la figure 1). Le carter intermédiaire 16 comprend un moyeu 50 entouré par une paroi cylindrique 52 et reliée à celle-ci par des bras radiaux (non visibles). Le boîtier d'accessoires 40 est fixé au moyeu 50 du carter intermédiaire 16, sa partie médiane 48 comportant en amont des moyens 52 de fixation sur ce moyeu 50.

Chaque bras 46 du boîtier d'accessoires 40 est relié par une bielle 54 de reprise de poussée à un anneau 56 monté autour du carter inter-turbine 22. Plus précisément, chaque bras 46 comporte à son extrémité aval une chape 58 portant un axe d'articulation d'une extrémité amont d'une bielle 54 dont l'extrémité aval est articulée sur un axe porté par une chape 60 solidaire de l'anneau 56 (figure 3).

Comme on le voit en figure 2, les bielles 54 sont plus courtes que celles 32 de la technique antérieure et sont sensiblement parallèles entre elles et à l'axe longitudinal LL de la turbomachine. Dans l'exemple représenté, elles ont une section de forme circulaire. L'axe d'articulation de l'extrémité amont de chaque bielle 54 a une orientation sensiblement tangentielle par rapport à une circonférence centrée sur l'axe longitudinal LL, et l'axe d'articulation de l'extrémité aval de chaque bielle 54 a une orientation sensiblement radiale par rapport à cet axe LL.

Comme cela est visible en figure 2, la suspension aval 30 de la turbomachine au pylône est fixée à l'anneau 56. Dans l'exemple représenté, les chapes 60 d'articulation des extrémités aval des bielles 54 sont situées dans une zone qui est sensiblement diamétralement opposée à la suspension aval 30. Les moyens de reprise de poussée formés par le boîtier d'accessoires 40 et les bielles 54 sont ainsi situés en partie basse du moteur, par opposition à la technique antérieure.

Le carter intermédiaire 16 est ainsi relié au carter inter-turbine 22 par le boîtier d'accessoires 40 et les bielles 54, qui assurent ainsi un chemin d'effort entre les carters 16 et 22 et empêchent la flexion des carters du moteur en fonctionnement.

On se réfère désormais à la variante de réalisation de la figure 4. Les boîtiers d'accessoires 140 sont au nombre de deux. Ils ont une forme allongée et sont sensiblement parallèles entre eux et à l'axe longitudinal LL de la turbomachine. Ils sont situés à distance circonférentielle l'un de l'autre et sont par exemple situés respectivement à 3 et 9 heures autour de l'axe LL, par analogie avec le cadran d'une horloge.

Chaque boîtier 140 comprend des faces latérales de montage d'équipements 42. Chaque boîtier 140 est monté en aval du carter intermédiaire 16, autour du carter de compresseur haute pression, et son extrémité amont comprend des moyens 52 de fixation sur le moyeu 50 du carter intermédiaire 16.

Chaque boîtier d'accessoires 140 est relié par une bielle 54 de reprise de poussée à un anneau 56 monté autour du carter inter-turbine 22. Plus précisément, chaque boîtier 140 comporte à son extrémité aval une chape 58 portant un axe d'articulation d'une extrémité amont d'une bielle 54 dont l'extrémité aval est articulée sur un axe porté par une chape 60 solidaire de l'anneau 56.

Les bielles 54 sont sensiblement parallèles entre elles et à l'axe longitudinal LL. Dans l'exemple représenté, elles ont une section de forme circulaire. Les axes d'articulation des bielles 54 sont perpendiculaires à la direction des bielles. L'axe d'articulation de l'extrémité amont de chaque bielle 54 a une orientation sensiblement tangentielle par rapport à une circonférence centrée sur l'axe LL, et l'axe d'articulation de l'extrémité aval de chaque bielle 54 a une orientation sensiblement radiale par rapport à cet axe LL.

Les moyens de reprise de poussée formés par le boîtier d'accessoires 140 et les bielles 54 sont situés sur les côtés du moteur, par opposition à la technique antérieure.

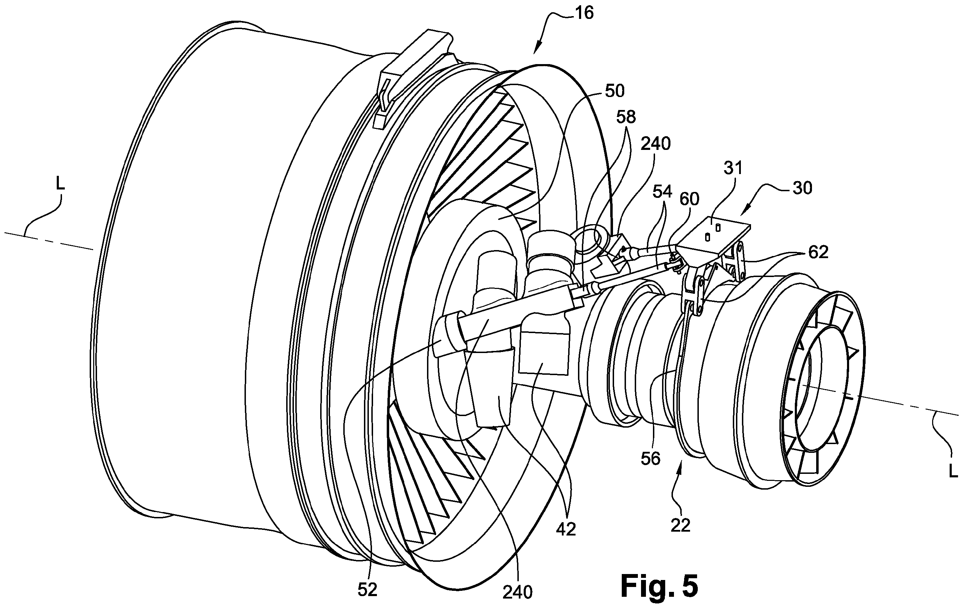

On se réfère maintenant à la figure 5 qui représente une autre variante de réalisation de l'invention dans laquelle les éléments déjà décrits dans ce qui précède sont désignés par les mêmes références.

La variante de réalisation de la figure 5 diffère de celle des figures 2 et 3 essentiellement par les points suivants.

Les boîtiers d'accessoires 240 sont au nombre de deux. Ils ont une forme allongée et sont inclinés l'un par rapport à l'autre et par rapport à l'axe longitudinal LL de la turbomachine. Ils sont situés à distance circonférentielle l'un de l'autre et ont leurs extrémités amont situées par exemple respectivement à 3 heures et 9 heures autour de l'axe LL, par analogie avec le cadran d'une horloge.

Chaque boîtier 240 comprend des faces latérales de montage d'équipements 42. Chaque boîtier 240 est monté en aval du carter intermédiaire 16, autour du carter de compresseur haute pression, et son extrémité amont comprend des moyens 52 de fixation sur le moyeu 50 du carter intermédiaire 16.

Chaque boîtier d'accessoires 240 est relié par une bielle 54 de reprise de poussée à un élément de support 31 de la suspension arrière 30. Cet élément de support est configuré pour être fixé à un pylône d'aéronef et comprend, dans l'exemple représenté, une platine comportant des orifices de montage de moyens de fixation du type vis-écrou.

Plus précisément, chaque boîtier 240 comporte à son extrémité aval une chape 58 portant un axe d'articulation d'une extrémité amont d'une bielle 54 dont l'extrémité aval est articulée sur un axe 60 porté par une chape solidaire de l'élément 31 ou de sa platine.

L'élément 31 est relié par des biellettes 62 à un anneau 56 similaire à celui décrit dans ce qui précède, cet anneau 56 étant monté autour du carter inter-turbine 22 de la turbomachine.

Les bielles 54 sont inclinées l'une par rapport à l'autre et par rapport à l'axe longitudinal LL. Elles forment sensiblement un V ensemble, les boîtiers 240 s'étendant longitudinalement dans le prolongement des bielles 54. Dans l'exemple représenté, elles ont une section de forme circulaire.

Les axes d'articulation des bielles 54 sont perpendiculaires à la direction des bielles.

## Revendications

1. Turbomachine, comportant deux carters annulaires (16, 22) structuraux reliés entre eux par des moyens (40, 54) de reprise des efforts de poussée du moteur, qui comprennent des bielles (54), **caractérisée en ce que** ces moyens de reprise de poussée comprennent en outre au moins un boîtier d'accessoires (40, 140, 240) qui est fixé à un premier desdits carters (16) et qui est relié par lesdites bielles à l'autre desdits carters (22).

2. Turbomachine selon la revendication 1, **caractérisée en ce que** ledit au moins un boîtier d'accessoires (40, 140, 240) est fixé à un moyeu (50) d'un carter intermédiaire (16).

3. Turbomachine selon la revendication 1 ou 2, **caractérisée en ce que** les bielles (54) ont une première extrémité articulée sur ledit au moins un boîtier d'accessoires (40, 140, 240) et une deuxième extrémité reliée directement ou indirectement à un carter inter-turbine (22) ou à un carter d'échappement.

4. Turbomachine selon la revendication 3, **caractérisée en ce que** les bielles (54) ont la deuxième extrémité articulée sur le carter inter-turbine (22) ou le carter d'échappement.

5. Turbomachine selon la revendication 3, **caractérisée en ce que** les bielles (54) ont la deuxième extrémité reliée au carter inter-turbine (22) ou au carter d'échappement par l'intermédiaire de moyens (30) de suspension aval de la turbomachine.

6. Turbomachine selon la revendication 5, **caractérisée en ce que** les bielles (54) ont la deuxième extrémité articulée sur les moyens de suspension (30) qui sont montés sur ledit carter inter-turbine ou d'échappement.

7. Turbomachine selon la revendication 5 ou 6, **caractérisée en ce que** les moyens de suspension (30) comprennent un élément support (31) configuré pour être fixé à un pylône d'aéronef.

8. Turbomachine selon l'une des revendications précédentes, **caractérisée en ce que** les moyens de reprise de poussée comprennent un seul boîtier d'accessoires (40) qui a une forme générale en V ou U et qui comprend deux bras latéraux (46) reliés ensemble par une partie médiane (48), cette partie médiane étant fixée audit premier carter (16) et les bras étant chacun reliés par une bielle (54) à l'autre carter (22).

9. Turbomachine selon l'une des revendications 1 à 7, **caractérisée en ce que** les moyens de reprise de poussée comprennent deux boîtiers d'accessoires (140, 240) indépendants et de forme allongée, chaque boîtier d'accessoires comportant une extrémité longitudinale fixée au premier carter (16) et une extrémité longitudinale opposée reliée par une bielle (54) à l'autre carter (22).

10. Turbomachine selon l'une des revendications précédentes, **caractérisée en ce que** les bielles (54) sont sensiblement parallèles entre elles et à l'axe longitudinal de la turbomachine.

11. Turbomachine selon l'une des revendications précédentes, **caractérisée en ce que** chaque bielle (54) comprend une première extrémité articulée sur une chape (58) solidaire d'un carter (44) dudit au moins un boîtier d'accessoires (40) et une seconde extrémité articulée sur une chape (60) solidaire d'un organe (31, 56) monté sur ledit autre carter (22).

12. Turbomachine selon la revendication 11, **caractérisée en ce que** l'organe est un anneau (56) qui est monté autour dudit autre carter et sur lequel sont fixés des moyens (30) de suspension de la turbomachine à un pylône d'aéronef.

13. Turbomachine selon la revendication 11, **caractérisée en ce que** l'organe est un élément support (31) de moyens de suspension de la turbomachine à un pylône d'aéronef.

14. Turbomachine selon l'une des revendications précédentes, **caractérisée en ce que** ledit au moins un boîtier d'accessoires (40, 140, 240) comporte un carter qui porte des moyens (52) de fixation à la turbomachine et des moyens de liaison aux bielles (54), et qui est structural (44) pour assurer une transmission d'effort entre les moyens de fixation et les moyens de liaison.

## Patentansprüche

1. Turbomaschine, umfassend zwei strukturelle ringförmige Gehäuse (16, 22), die untereinander durch Mittel (40, 54) zur Motorschubkräfte-Aufnahme verbunden sind, die Pleuelstangen (54) umfassen, **dadurch gekennzeichnet, dass** diese Mittel zur SchubAufnahme weiter mindestens ein Zubehörgehäuseteil (40, 140, 240) umfassen, das an einem ersten der Gehäuse (16) fixiert ist und das durch die Pleuelstangen mit dem anderen der Gehäuse (22) verbunden ist.

2. Turbomaschine nach Anspruch 1, **dadurch gekennzeichnet, dass** das mindestens eine Zubehörgehäuseteil (40, 140, 240) an einer Nabe (50) eines zwischenliegenden Gehäuses (16) fixiert ist.

3. Turbomaschine nach Anspruch 1 oder 2, **dadurch gekennzeichnet, dass** die Pleuelstangen (54) ein auf dem mindestens einen Zubehörgehäuseteil (40, 140, 240) angelenktes erstes Ende und ein direkt oder indirekt mit einem Interturbinengehäuse (22) oder mit einem Austrittsgehäuse verbundenes zweites Ende aufweisen.

4. Turbomaschine nach Anspruch 3, **dadurch gekennzeichnet, dass** die Pleuelstangen (54) das zweite Ende auf dem Interturbinengehäuse (22) oder dem Austrittsgehäuse angelenkt aufweisen.

5. Turbomaschine nach Anspruch 3, **dadurch gekennzeichnet, dass** die Pleuelstangen (54) das zweite Ende mit dem Interturbinengehäuse (22) oder dem Austrittsgehäuse mittels der Turbomaschine nachgelagerten Mitteln (30) zur Aufhängung verbunden aufweisen.

6. Turbomaschine nach Anspruch 5, **dadurch gekennzeichnet, dass** die Pleuelstangen (54) das zweite Ende auf den Mitteln (30) zur Aufhängung, die auf dem Interturbinen- oder dem Austrittsgehäuse montiert sind, angelenkt aufweisen.

7. Turbomaschine nach Anspruch 5 oder 6, **dadurch gekennzeichnet, dass** die Mittel (30) zur Aufhängung ein Trägerelement (31) umfassen, konfiguriert, um an einem Luftfahrzeugpylon fixiert zu werden.

8. Turbomaschine nach einem der vorstehenden Ansprüche, **dadurch gekennzeichnet, dass** die Mittel zur Schubaufnahme ein einziges Zubehörgehäuseteil (40) umfassen, das eine allgemeine V- oder U-Form aufweist und das zwei Seitenarme (46) umfasst, die gemeinsam durch einen Mittelteil (48) verbunden sind, wobei dieser Mittelteil an dem ersten Gehäuse (16) fixiert ist und die Arme jeweils durch eine Pleuelstange (54) mit dem anderen Gehäuse (22) verbunden sind.

9. Turbomaschine nach einem der Ansprüche 1 bis 7, **dadurch gekennzeichnet, dass** die Mittel zur Schubaufnahme zwei Zubehörgehäuseteile (140, 240), unabhängig und von länglicher Form, umfassen, wobei jedes Zubehörgehäuseteil ein längsgerichtetes, am ersten Gehäuse (16) fixiertes Ende, und ein gegenüberliegendes, längsgerichtetes, durch eine Pleuelstange (54) mit dem anderen Gehäuse (22) verbundenes Ende umfasst.

10. Turbomaschine nach einem der vorstehenden Ansprüche, **dadurch gekennzeichnet, dass** die Pleuelstangen (54) im Wesentlichen untereinander und zu der Längsachse der Turbomaschine parallel sind.

11. Turbomaschine nach einem der vorstehenden Ansprüche, **dadurch gekennzeichnet, dass** jede Pleuelstange (54) ein auf einem Gabelstück (58), das mit einem Gehäuse (44) des mindestens einen Zubehörgehäuseteils (40) einstückig ist, angelenktes erstes Ende, und ein auf einem Gabelstück (60), das mit einem auf dem anderen Gehäuse (22) montierten Organ (31, 56) einstückig ist, angelenktes zweites Ende umfasst.

12. Turbomaschine nach Anspruch 11, **dadurch gekennzeichnet, dass** das Organ ein Ring (56) ist, der um das andere Gehäuse herum montiert ist, und auf dem die Mittel (30) zur Aufhängung der Turbomaschine an einen Luftfahrzeugpylon fixiert sind.

13. Turbomaschine nach Anspruch 11, **dadurch gekennzeichnet, dass** das Organ ein Trägerelement (31) von Mitteln zur Aufhängung der Turbomaschine an einen Luftfahrzeugpylon ist.

14. Turbomaschine nach einem der vorstehenden Ansprüche, **dadurch gekennzeichnet, dass** das mindestens eine Zubehörgehäuseteil (40, 140, 240) ein Gehäuse umfasst, das Mittel (52) zur Fixierung an die Turbomaschine und Mittel zur Verbindung an die Pleuelstangen (54) trägt, und das strukturell (44) ist, um eine Übertragung der Kraft zwischen den Mitteln zur Fixierung und den Mitteln zur Verbindung zu gewährleisten.

## Claims

1. Turbine engine, comprising two structural annular casings (16, 22) which are interconnected by means (40, 54) for absorbing thrust forces from the engine, which comprise connecting rods (54), **characterised in that** these means for absorbing thrust further comprise at least one accessory gearbox (40, 140, 240) which is fixed to a first of said casings (16) and which is connected by said connecting rods to the other of said casings (22).

2. Turbine engine according to claim 1, **characterised in that** said at least one accessory gearbox (40, 140, 240) is fixed to a hub (50) of an intermediate casing (16).

3. Turbine engine according to claim 1 or 2, **characterised in that** the connecting rods (54) have a first end articulated to said at least one accessory gearbox (40, 140, 240) and a second end which is connected directly or indirectly to an inter-turbine casing (22) or to an exhaust casing.

4. Turbine engine according to claim 3, **characterised in that** the second end of the connecting rods (54) is articulated on the inter-turbine casing (22) or the exhaust casing.

5. Turbine engine according to claim 3, **characterised in that** the second end of the connecting rods (54) is connected to the inter-turbine casing (22) or to the exhaust casing by downstream suspension means (30) of the turbine engine.

6. Turbine engine according to claim 5, **characterised in that** the second end of the connecting rods (54) is articulated on the suspension means (30) which are mounted on said inter-turbine or exhaust casing.

7. Turbine engine according to claim 5 or 6, **characterised in that** the suspension means (30) comprises a support element (31) which is designed to be fixed to an aircraft strut.

8. Turbine engine according to one of the preceding claims, **characterised in that** the means for absorbing thrust comprise a single accessory gearbox (40) which is generally V or U-shaped and which comprises two lateral arms (46) which are interconnected by a middle portion (48), said middle portion being fixed to said first casing (16) and the arms each being connected by a connecting rod (54) to the other casing (22).

9. Turbine engine according to one of claims 1 to 7, **characterized in that** the means for absorbing thrust comprise two independent accessory gearboxes (140, 240) which have an elongate shape, each accessory gearbox comprising a longitudinal end which is fixed to the first casing (16) and an opposite longitudinal end connected by a connecting rod (54) to the other casing (22).

10. Turbine engine according to one of the preceding claims, **characterised in that** the connecting rods (54) are substantially parallel to one another and to the longitudinal axis of the turbine engine.

11. Turbine engine according to one of the preceding claims, **characterised in that** each connecting rod (54) comprises a first end articulated on a yoke (58) which is rigidly connected to a casing (44) of said at least one accessory gearbox (40) and a second end articulated on a yoke (60) which is rigidly connected to a member (31, 56) which is mounted on said other casing (22).

12. Turbine engine according to claim 11, **characterised in that** the member is a ring (56) which is mounted around said other casing and on which suspension means (30) are fixed for suspending the turbine engine from an aircraft strut.

13. Turbine engine according to claim 11, **characterised in that** the member is a support member (31) for suspension means for suspending the turbine engine from an aircraft strut.

14. Turbine engine according to one of the preceding claims, **characterised in that** said at least one accessory gearbox (40, 140, 240) comprises a casing which carries means (52) of attachment to the turbine engine and means of connection to the connecting rods (54), and which is structural (44) in order to ensure a transmission of force between the attachment means and the connection means.
